# EUROPEAN PATENT SPECIFICATION

(11) **EP 3 937 831 B1**
(45) Date of publication and mention of the grant of the patent: **27.12.2023**
(21) Application number: 20708126.6
(22) Date of filing: 10.03.2020
(51) Int. Cl.: A61C 8/00

(54) **TOOL ASSEMBLY FOR MOUNTING OF A DENTAL PROSTHESIS AND METHOD OF MOUNTING**
WERKZEUGANORDNUNG ZUM MONTIEREN EINER ZAHNPROTHESE UND MONTAGEVERFAHREN
ENSEMBLE OUTIL POUR LE MONTAGE D'UNE PROTHÈSE DENTAIRE ET PROCÉDÉ DE MONTAGE

(30) Priority: 11.03.2019 LU 101149
(43) Date of publication of application: 19.01.2022
(73) Proprietor: Jade Finance S.A.R.L., 1870 Luxembourg (LU)
(72) Inventor: HORNBECK, Jacques, 1870 Luxembourg (LU)
(74) Representative: Office Freylinger
(86) International application number: PCT/EP2020/056391
(87) International publication number: WO 2020/182833

(56) References cited:
- EP-A1- 3 384 871
- WO-A1-2009/127880
- WO-A1-2019/162446

## Description

### Technical field

The present invention generally relates to techniques for the mounting of a dental prosthesis such as a crown, bridge or denture. The invention more particularly relates to an improved tool assembly for mounting an abutment and to method of mounting an abutment.

### Background Art

Dental implants are often used when a patient requires a prosthetic device to hold one or more artificial teeth in place. Such implants are typically securely mounted to the jawbone, e.g. by surgical screws or other hygienic fixing means; and then, over a period, typically months, the bone and other tissue are permitted to grow around the implant.

A metal abutment may subsequently be securely fixed to the implant or a base thereon, and then a dental prosthesis such as a tooth crown, dental bridge or dental construction e.g. manufactured using 3D printing, may subsequently be securely fixed onto the abutment.

Typically, the metal abutment is fixed to the implant or a base thereon by means of screws or bolts - commonly called implant screws - , and tightened in place using one or more tools.

In some configurations, it may be useful to provide an inclined abutment (angulated relative to the implant screw and thereby the implant), but this may be problematical since it makes it difficult or impossible to easily access the head of the implant screw with the usual (substantially straight) tool through the angulated abutment bore. There have been a number of attempts to try to overcome this problem.

WO 2009/127880 describes an abutment / spacer element for use in a dental implant assembly having a single aperture therethrough, the single aperture comprising an implant screw access bore and an offset abutment screw bore. The implant screw access bore is designed such that, in use, the implant screw access bore is substantially coaxial with the implant screw. The implant screw access bore is inclined relative to the implant or the implant screw. The degree of incline at which the implant screw access bore is inclined relative to the implant or the implant screw may be from 0 to 10 degrees. The aperture defines a passage via which the implant screw is accessible and via which a substantially linear tool may be inserted along the longitudinal axis of the implant to engage and turn the implant screw to secure it to an implant. The opening of the aperture includes a notch or cut-away portion therein to facilitate insertion of a tool and the implant screw since the tool.

### Technical problem

A problem is that, with known mounting/fixing tools and techniques, the tools are not such as to be easily manipulated by a dentist in the dental surgery, making fixing of elements such as abutments securely in place more difficult. Further, as the tool parts in question are of relatively small dimensions (e.g. up to 30mm), the difficulty of manipulation raises the risk of the dentist's grip of a tool part being lost, of a tool part dislodging or falling, and even of a tool part being swallowed or even inhaled by a patient being treated.

It is an object of the present invention to provide mounting/fixing tools and mounting techniques enabling easy manipulation by a dentist, facilitating secure fixing of elements such as abutments and/or reducing or minimizing the risk of a tool part dislodging or free falling. This object is achieved by a tool assembly as claimed in claim 1, and the method of mounting a dental abutment as claimed in claim 15.

### General Description of the Invention

In order to overcome the above-mentioned issue, the present invention provides tool assembly for mounting a dental abutment to an implant or frame having an axis of elongation (B). The tool assembly comprises a first tool, the first tool having an axis of elongation (A), a first end configured to engage, in use, the abutment, and a second end, at least a first portion of the first tool at or near the first end having a peripheral wall and, opposite the wall, a first opening extending along all or part of the first portion, wherein a second opening open in an axial direction is disposed at the first end. The tool assembly further comprises a second tool having an axis of elongation (C) configured to releasably engage a fixing element. A contiguous space is defined between the first opening and the second opening whereby, in use, (i) the fixing element, or (ii) the fixing element attached to the second tool, may pass through the first opening and the second opening to permit secure fixing of the abutment to an implant or frame using the second tool. There is an angle β between the axis of elongation B of the implant and the axis of elongation C of the second tool.

The axis B and C are offset / angulated / not coaxial / not coinciding / not parallel. The angle β between the axis of elongation B of the implant and the axis of elongation C is between 10° and 40°.

The angle β is preferably larger than 11°, 12°,14°,16°,18°, 20°, 22°, 24°, 25°, 26°, 28°, 30°, 32°, 34°, 36° or 38°. The angle α is preferably smaller than 37°, 36°, 34°, 32°, 30°,28°, 26°,24°, 20°,18°,16°,14°, 12° or 11°.

The axis of elongation B of the implant is preferably substantially vertical, i.e. in the direction of the natural teeth in the jaw.

In an embodiment, the axis of elongation A of the first tool and the axis of elongation B of the implant do not coincide / overlap. They are not parallel preferably; there is an angle α between the axis of elongation A of the first tool and the axis of elongation B of the implant.

In an embodiment the angle α between the axis of elongation B of the implant and the axis of elongation C is between 5° and 30°.

The angle α is preferably larger than 6°, 8°, 10°, 11°, 12°, 14°, 16°, 18°, 20°, 22°, 24°, 25°, 26° or 28°. The angle β is preferably smaller than 29°, 28°, 26°, 24°, 20°,18°,16°,14°, 12°, 10°, 8° or 7°.

Preferably, the axis A is perpendicular / at a 90° angle with regard to the plane of the implant screw access bore.

In an embodiment, the axis of elongation C of the second tool does not coincide with the axis of elongation A of the first tool. Preferably, there is an angle θ between the axis of elongation C of the second tool and the axis of elongation A of the first tool.

In an embodiment the angle θ between the axis of elongation A of the first tool implant and the axis of elongation C of the second tool is between 5° and 15°.

The angle θ is preferably larger than 6°, 8°, 10°, 11°, 12°or 14°. The angle θ is preferably smaller than 14°, 12°, 10°, 8°, 7° or 6°.

The angle β is larger than the angle α. The angle β is larger than the angle θ. The angle α is larger than the angle θ.

A big advantage of the present tool assembly as compared to prior art assemblies described in WO 2009/127880 resides in the fact that the second tool is held at an angle with regard to the axis of elongation of the implant and the abutment. This allows the second tool to be more easily manipulated in the confined space of a buccal cavity. Indeed, if the second tool does not need to be aligned with the implant axis, it is much easier to fix the abutment to the implant since the second tool can be grasped and turned more easily especially if the implant is in the back of the mouth.

Furthermore, the abutment used in the present tool assembly does not require having a cut-out portion for the second tool to pass through, as in WO 2009/127880. Indeed since the abutment opening where the second tool passes through is at angle with regard to the axis of the implant on which it is fixed, there needs to be a cut out as otherwise the screw and the tool would not be able to be inserted at all or very difficultly. The abutment thus does not have to be made especially for the tool. This makes it less complex and less expensive. The tool of the invention can be used basically with any abutment.

In an embodiment, the abutment is designed such that, in use, the fixing element is substantially coaxial with the implant. The second engagement element (i.e. the implant screw access bore) may however be inclined relative to the implant or the fixing element. The degree of incline at which the second engagement element is inclined relative to the implant or the fixing element may vary, but preferably may be from 5 to 35 degrees. The second engagement element cooperates with the first engagement element of the first tool to fix the first element on the abutment. The angle between the axis A and the second engagement element (i.e. the implant screw access bore) is preferably a 90° angle, more preferably an angle between 80° and 100°.

At least part of the wall of the first portion of the first tool has preferably a partial cylindrical form.

In embodiments, along said at least part the wall has a partial cylindrical form so that, when viewed in axial cross-section, an angle formed between radii joining the axis of elongation and each of the two circumferential ends of the wall is (i) 120 degrees or more, (ii) 150 degrees or more, 180 degrees of more, or is 180 degrees. In other words, one side of the first portion of the first tool has a cut-away portion in the cylindrical part, such that, in situ, the cut-away portion provides access to the bore(s) of the abutment.

The partial cylindrical form is preferably disposed at or adjacent the first end.

Preferably, the first portion of the first tool extends part of the length of the first tool. In embodiments, the first portion of the first tool extends (i) 30-60%, (ii) 35-55%, (iii) 40-50%, (iv) 45-50% or (v) 50% of the length of the first tool.

In an embodiment, a second portion of the first tool, formed by part of the first tool other than the first portion, comprises a manually-graspable portion or is configured to releasably engage a handle for manipulation by a user.

The wall comprises, when viewed in transverse cross-section, preferably a rectangular portion at or adjacent the first end and a curved portion adjacent the second portion.

Preferably, the first portion of the first tool has a larger transverse dimension than that of the remainder of the first tool.

The tool assembly further comprises, in a preferred embodiment, at said first end, at least one first engagement element configured for releasable attachment to the abutment via cooperating at least one second engagement element on the abutment. In an embodiment, the at least one first engagement element comprises one of an external screw thread and an internal screw thread and the at least one second engagement element comprises the other of an external screw thread and an internal screw thread.

The fixing element may comprise a bolt or screw configured for screwing into the implant or frame.

The second tool comprises preferably, at a third end thereof, at least one third engagement element configured for releasable attachment to the fixing element via cooperating at least one fourth engagement element on the fixing element. In an embodiment, the cooperating at least one third engagement element and at least one fourth engagement element comprise cooperating snap-fix attachment elements.

According to another aspect of the present invention, there is provided a method of mounting a dental abutment to a dental implant or frame, comprising: providing a tool assembly according to any of the preceding claims; releasably attaching the first end of the first tool to the abutment; preferably releasably attaching the first tool together with the abutment releasably attached thereto to the implant or frame, releasably attaching the second tool to the a fixing element; passing the fixing element on the second tool through the first opening and the second opening; manipulating the second tool so as to attach the abutment to the implant or frame using the fixing element; and detaching the second tool from the a fixing element and removing the second tool through the second opening and the first opening.

Finally the first tool is detached from the abutment.

The first tool may be pre-mounted through the first engagement element onto the abutment and is used to carry/convey/transfer and position the abutment onto the implant.

An advantage of the invention is that the tool assembly and mounting techniques enable easy manipulation by a dentist, facilitating secure fixing of elements such as abutments, and/or reducing or minimizing the risk of a tool part dislodging or free falling.

### Brief Description of the Drawings

Further details and advantages of the present invention will be apparent from the following detailed description of a non-limiting embodiment with reference to the attached drawings, wherein:
Figure 1 is a lateral view of a tool assembly according to an embodiment, fully assembled and attached to an abutment;
Figure 2 is a perspective view from above of the lower part of the tool assembly of Fig. 1;
Figure 3 is a lateral exploded view of the tool assembly of Fig. 1; and
Figure 4 is a lateral enlarged view of the junction between the lower part of the tool assembly of Fig. 1 and the abutment.

### Description of Preferred Embodiments

In the following, like reference numerals denote like parts, and any element, design feature or method step of any embodiment may be used in combination with an element, design feature or method step of any other embodiment unless stated otherwise herein.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, characteristics, compounds or groups described in conjunction with a particular aspect, embodiment or example of the invention are to be understood to be applicable to any other aspect, embodiment or example described herein unless incompatible therewith.

Throughout the description and claims of this specification, the terms "aperture" and "bore" include without limitation any aperture, opening, bore, channel, passage or the like.

Throughout the description and claims of this specification, the terms "inclined", "angulated" "offset", "not coinciding", and "not parallel" may be used interchangeably to refer to a component whose longitudinal axis, in use is not coaxial with the longitudinal axis of another component (for example a dental implant) with which the first component is to be used.

Unless indicated otherwise, the components described/illustrated herein may be made of titanium or surgical steel, and/or may be fabricated using turning and/or machining.

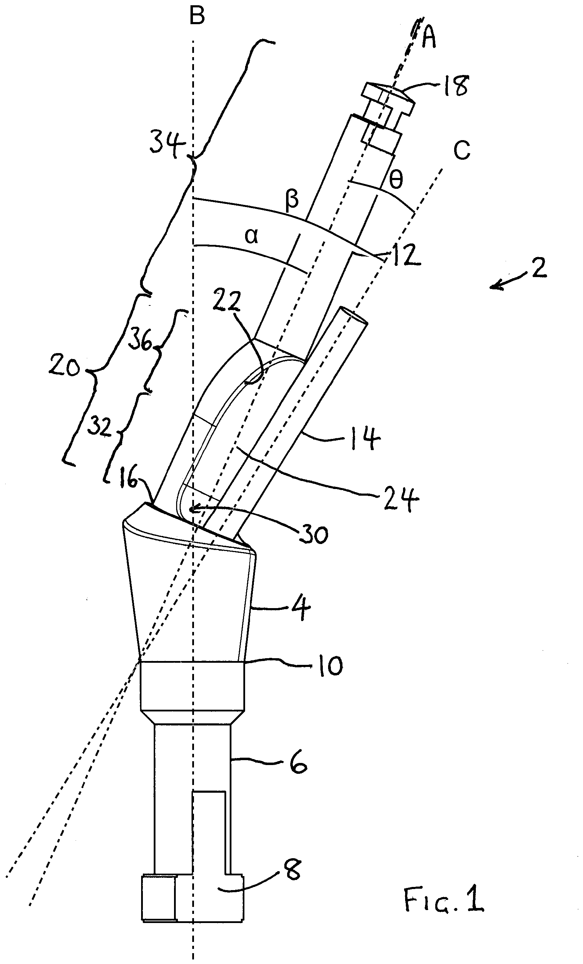

Figure 1 is a lateral view of a tool assembly 2 according to an embodiment, fully assembled and attached to an abutment 4. As illustrated, an implant 6 is configured to be rigidly attached to a frame (not shown) already embedded in the jaw (not shown) of a patient, for example through a cooperating fixing element (not shown) engaging the implant 6 via a shaped recess 8. Alternatively, the element labelled 6 may be formed by or constitute a base or pillar integral with the frame (not shown).

The present invention is made in consideration of the requirement to securely fix the abutment 4 to the implant 6 or frame when the implant 6 is already securely fixed in the jawbone. In a preferred embodiment, the abutment 4 and the implant 6 have abutting flat or form-fitting surfaces (not shown in Fig. 1), as indicated at 10.

In accordance with the invention, the tool assembly 2 includes a first tool 12 and a second tool 14.

The first tool 12 has an axis of elongation A, a first end 16 configured to engage, in use, the abutment 4, and a second end 18. At least a first portion 20 of the first tool 12 at or near the first end 16 has a peripheral wall 22. In embodiments, the peripheral wall 22 may have a thickness up to a few mm, e.g. up to 3 mm, and/or may be up to 10% of the diameter of the first portion 20.

In the first portion 20 of the first tool 12, and opposite the wall 22, a first opening 24 extends along all or part of the first portion 20.

The axis of elongation A of the first tool 12 coincides with the axis of the aperture, opening or second engagement element 42 of the abutment 4. The axis of elongation A of the first tool 12 and the axis of elongation B of the implant 6 (and the abutment 4 when it is mounted to the implant) do not coincide / overlap. There is an angle α of between 5° and 35° between these two axes.

The axis of elongation B of the implant 6 (and the abutment when it is mounted on the implant) is substantially vertical. When the implant 6 is mounted in a substantially vertical position in the jawbone, the first tool 12 is extending / projecting at an angle α into the buccal cavity of the patient. It can thus be easily grasped and manipulated and mounted to the implant by the dentist together with the second tool.

In the context of the invention, "substantially vertical" is understood as the same angle as natural teeth set in the jaw and which protrude in the buccal cavity at a substantially vertical angle.

It may however be that the implant is implanted in the jaw at an angle which deflects from the vertical, depending on the configuration of the implant or denture that is fixed to the implant and on other factors like the bone quality of the jaw, the number of implants, the position of the implant in the mouth (upper jaw, lower jaw, front teeth back teeth) etc..

One disadvantage of the configuration as shown on fig. 8 of WO 2009/127880 is that the two tools - the handle and the screwdriver - are in the each other's way when in use since the screwdriver must be inserted "behind" the handle when seen from the point of view of the dentist who installs said abutment in the mouth of a patient. This makes it difficult to tighten the screw since the handle is in the way. In the present configuration however, the two tools are not in the each other's way. The second tool (the screwdriver) is inserted via "the front" of the first tool - i.e. oriented towards the buccal cavity. It can thus be easily inserted while the first tool is in place. The screwdriver can be turned without the handle being in the way as in fig. 8 of WO 2009/127880.

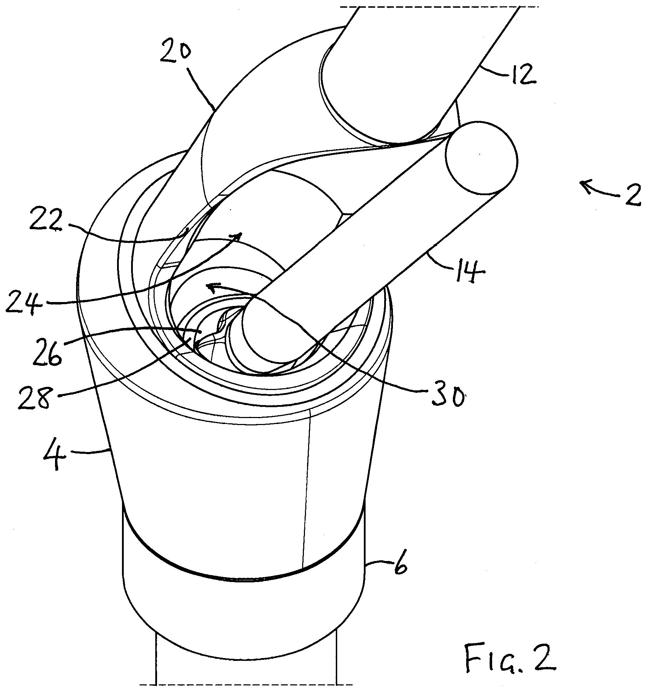

Referring briefly to Fig. 2, this is a perspective view from above of the lower part of the tool assembly 2 of Fig. 1. A second opening 26 that is open in an axial direction is disposed at the first end 16. In embodiments, the second opening 26 is circular in shape.

In accordance with the invention, the second tool 14 is configured to releasably engage a fixing element 28, as discussed in further detail hereinbelow.

Referring to Figs 1 and 2, a contiguous space 30 is defined between the first opening 24 and the second opening 26 such that, in use, (i) the fixing element 28, or (ii) the fixing element 28 attached to the second tool 14, may pass through the first opening 24 and the second opening 26 to permit secure fixing of the abutment 4 to an implant 6 or frame using the second tool 14, as discussed in further detail hereinbelow.

Returning to Fig. 1, in an embodiment, at least part 32 of the wall 22 has a partial cylindrical form. More particularly, in embodiments, along the at least part 32 of the wall 22 has a partial cylindrical form so that, when viewed in axial cross-section, an angle formed between radii joining the axis of elongation A and each of the two circumferential ends of the wall 22 is (i) 120 degrees or more, (ii) 150 degrees or more, 180 degrees of more, or is 180 degrees. In an embodiment, the part 32 with the partial cylindrical form is disposed at or adjacent the first end 16.

In an embodiment, the first portion 20 of the first tool 12 extends part of the length of the first tool 12. More particularly, in embodiments, the first portion 20 of the first tool 12 extends (i) 30-60%, (ii) 35-55%, (iii) 40-50%, (iv) 45-50% or (v) 50% of the length of the first tool 12.

In embodiments, the at least part 32 of the wall 22 comprises, when viewed in transverse cross-section, a rectangular portion at or adjacent the first end 16.

In an embodiment, a second portion 34 of the first tool 12, formed by part of the first tool 12 other than the first portion 20, comprises a manually-graspable portion or is configured to releasably engage a handle (not shown) for manipulation by a user. In embodiments, the first portion 20 comprises, when viewed in transverse cross-section, a curved part 36 adjacent the second portion 34.

In embodiments, the first portion 20 of the first tool 12 has a larger transverse dimension (e.g. diameter) than that of the remainder of the first tool 12, e.g. the second portion 34. For example, the first portion 20 may have a 100-300% larger transverse dimension (e.g. diameter) than that of the remainder of the first tool 12 so that the second tool can be inserted therethrough and have space to jiggle / wiggle.

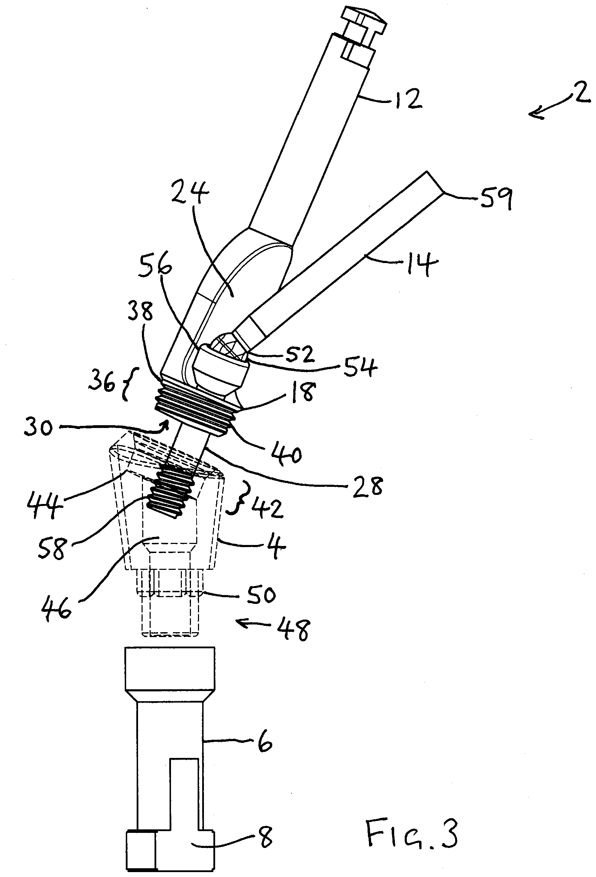

Figure 3 is a lateral exploded view of the tool assembly 2 of Fig. 1. In an embodiment, the first tool 12 includes, at the first end 16, at least one first engagement element 36 configured for releasable attachment to the abutment 4 via a cooperating at least one second engagement element 42 on the abutment 4. The first engagement element 36 may comprise an engagement ring 38 upon which an external screw thread 40 is provided, and/or the second engagement element 42 may comprise a hollow internal ring section 44, e.g. upon which an internal screw thread (not shown) is provided. In alternative embodiments, an internal screw thread is provided on the engagement ring 38, and/or an external screw thread (not shown) is provided on the internal ring section 44.

Via the first opening 24 defined by the wall 22, the second opening 26 defined by the engagement ring 38, and the internal ring section 44, the fixing element 28 (preferably attached to the second tool 14, as shown in Fig. 3), can be advanced from the exterior of the first tool 12 by the user into a chamber 46 defined within the abutment 4.

In embodiments, at or near an end 48 of the abutment 4 opposite to the internal ring section 44 the abutment 4 includes external formations 50, e.g. in the shape of a hex nut, for engaging a correspondingly shaped recess (not shown) in the implant 6, in order for the abutment 4 to be received in the implant 6 in an immovable (i.e. non-rotatable) manner.

As seen in Fig. 3, the second tool 14 may comprise, at a third (distal) end 52 thereof, at least one third engagement element 54 configured for releasable attachment to the fixing element 28 via cooperating at least one fourth engagement element 56 on the fixing element 28. At the end of the fixing element 28 opposite to the fourth engagement element 56, the fixing element may have an external screw thread 58 or other attachment element, for fixedly engaging a corresponding attachment element (e.g. internal screw thread) within the implant 6 or frame.

In embodiments, the fixing element 28 comprises a bolt or screw configured for screwing into the implant 6 or frame. In embodiments, the cooperating at least one third engagement element 54 and at least one fourth engagement element 56 comprise cooperating snap-fix (click-fix) attachment elements. That is, the third engagement element 54 (e.g. a ball having multiple outwardly biased projections) may be configured to enable the distal end 52 of the second tool 14 to be snapped into fourth engagement element 56 (e.g. a bolt head having an internal recess or recesses for receiving the ball and/or projections; not shown).

EP 3 541 318 describes a combination of a screw for a surgical application, and a driver for driving the screw for fastening an orthopaedic implant either to a bone or to an orthopaedic implant, in particular a dental component to a dental implant that can be used for the present purpose.

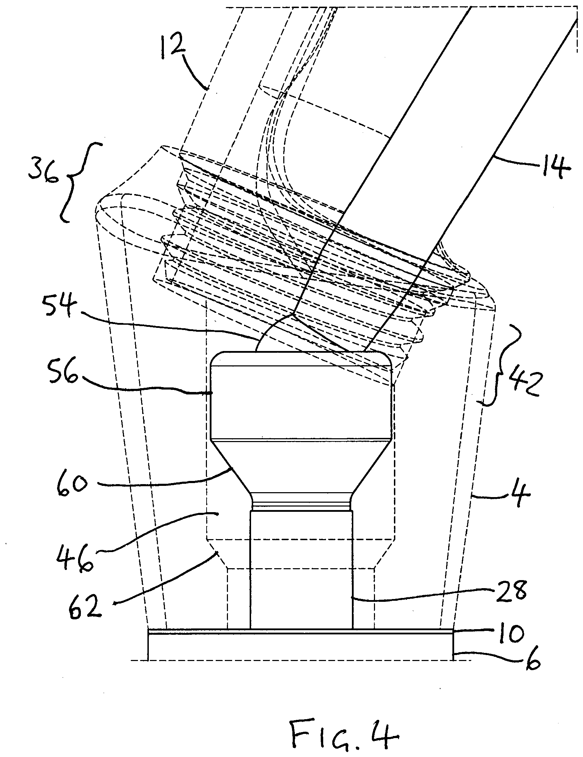

Figure 4 is a lateral enlarged view of the junction between the lower part of the tool assembly 2 of Fig. 1 and the abutment. The first tool 12 has releasably engaged the abutment 4 such that the at least one first engagement element 36 has (e.g. screw-threadedly) engaged the cooperating at least one second engagement element 42 on the abutment 4. The third engagement element 54 has engaged the fourth engagement element 56, enabling the fixing element 28 to be pushed down (in the direction of arrow B) into the abutment 4 and implant 6. Thereafter, by the user twisting the (proximal end 59) of the second tool 14 (opposite the distal end 52, the user can screw the fixing element 28 into the implant 6 or frame.

In an embodiment, such movement (and screwing in, in the direction of arrow B) is limited by a conical section 60 coming into contact with shoulder 62 on the abutment 4.

Thus, in accordance with an embodiment, a method of mounting a dental abutment using the tool assembly described above and illustrated herein is as follows (to an extent, the order of the steps may be varied). First, the first end 16 of the first tool 12 is releasably attached to the abutment 4. Then, the second tool 14 is releasably attached to the fixing element 28. Next, the fixing element 28 is passed on the second tool 14 through the first opening 24 and the second opening 26. The user then inserts both tools in the buccal cavity and positions the abutment on the implant. The user can hold both tools in between the thumb and the index finger and easily bring them in position without risk of dropping the screw or the abutment. The user then manipulates the second tool 14 so as to attach the abutment 4 to the implant 6 or frame using the fixing element 28. Finally, the second tool 14 is detached from the fixing element 28 and the second tool 14 removed through the second opening 26 and the first opening 24. Finally the first tool 12 is detached from the abutment 4. If the user wants to take the abutment out again, he will apply the above steps in reverse order.

### Legend:

| | | | |
|---|---|---|---|
| 2 | tool assembly | 44 | internal ring section |
| 4 | abutment | 46 | chamber |
| 6 | implant | 48 | end of the abutment |
| 8 | recess | 50 | external formations |
| 10 | abutting surfaces | 52 | third (distal) end of second tool |
| 12 | first tool | 54 | third engagement element |
| 14 | second tool | 56 | fourth engagement element |
| 16 | first end | 58 | external screw thread |
| 18 | second end | 59 | proximal end |
| 20 | first portion of the first tool | 60 | conical section |
| 22 | wall | 62 | shoulder |
| 24 | first opening | α | angle between the axis of elongation A of the first tool and the axis of elongation B of the implant |
| 26 | second opening | β | angle between the axis of elongation B of the implant and the axis of elongation C of the second tool |
| 28 | fixing element | θ | angle between the axis of elongation A of the first tool implant and the axis of elongation C of the second tool |
| 30 | contiguous space | A | axis of elongation A of the first tool |
| 32 | part of the wall | B | axis of elongation of the implant |
| 34 | second portion of the first tool | C | axis of elongation of the second tool |
| 36 | first engagement element | | |
| 38 | engagement ring | | |
| 40 | external screw thread | | |
| 42 | second engagement element | | |

## Claims

1. A tool assembly (2) for mounting a dental abutment (4) to an implant (6) or frame having an axis of elongation (B), the tool assembly comprising:
• a first tool (12), the first tool having an axis of elongation (A), a first end (16) configured to engage, in use, the abutment (4), and a second end (18), at least a first portion (20) of the first tool at or near the first end (16) having a peripheral wall (22) and, opposite the wall, a first opening (24) extending along all or part of the first portion (20), wherein a second opening (26) open in an axial direction is disposed at the first end (16);
• a second tool (14) having an axis of elongation (C) configured to releasably engage a fixing element (28),
wherein a contiguous space (30) is defined between the first opening (24) and the second opening (26) whereby, in use, (i) the fixing element (28), or (ii) the fixing element (28) attached to the second tool (14), may pass, in use, through the first opening (24) and the second opening (26) to permit secure fixing of the abutment (4) to the implant (6) or frame using the second tool (14),
wherein there is an angle β between the axis of elongation (B) of the implant (6) and the axis of elongation (C) of the second tool (14), and
**characterised in that** the angle β between the axis of elongation (B) of the implant and the axis of elongation (C) is between 10° and 40°.

2. The tool assembly according to claim 1, wherein at least part (32) of the wall (22) has a partial cylindrical form.

3. The tool assembly according to claim 2, wherein along said at least part (32) the wall (22) has a partial cylindrical form so that, when viewed in axial cross-section, an angle formed between radii joining the axis of elongation and each of the two circumferential ends of the wall is (i) 120 degrees or more, (ii) 150 degrees or more, 180 degrees of more, or is 180 degrees.

4. The tool assembly according to any one of claims 2 and 3, wherein the part (32) with the cylindrical form is disposed at or adjacent the first end (16).

5. The tool assembly according to any one of the preceding claims, wherein the first portion (20) of the first tool (12) extends part of the length of the first tool.

6. The tool assembly according to any one of the preceding claims, wherein the first portion (20) of the first tool extends (i) 30-60%, (ii) 35-55%, (iii) 40-50%, (iv) 45-50% or (v) 50% of the length of the first tool (12).

7. The tool assembly according to any one of claims 5 and 6, wherein a second portion (34) of the first tool (12), formed by part of the first tool other than the first portion (20), comprises a manually-graspable portion or is configured to releasably engage a handle for manipulation by a user.

8. The tool assembly according to any one of the preceding claims, wherein the wall (22) comprises, when viewed in transverse cross-section, a rectangular portion (32) at or adjacent the first end and a curved portion (36) adjacent the second portion (34).

9. The tool assembly according to any one of the preceding claims, wherein the first portion (20) of the first tool (12) has a larger transverse dimension than that of the remainder of the first tool (12).

10. The tool assembly according to any one of the preceding claims, further comprising, at said first end, at least one first engagement element (36) configured for releasable attachment to the abutment (4) via cooperating at least one second engagement element (42) on the abutment (4).

11. The tool assembly according to claim 10, wherein the at least one first engagement element (36) comprises one of an external screw thread (40) and an internal screw thread and the at least one second engagement element (42) comprises the other of an external screw thread and an internal screw thread.

12. The tool assembly according to any one of the preceding claims, wherein the fixing element (28) comprises a bolt or screw configured for screwing into the implant (6) or frame.

13. The tool assembly according to any one of the preceding claims, wherein the second tool (14) comprises, at a third end (52) thereof, at least one third engagement element (54) configured for releasable attachment to the fixing element (28) via cooperating at least one fourth engagement element (56) on the fixing element (28).

14. The tool assembly according to claim 10, wherein the cooperating at least one third engagement element (54) and at least one fourth engagement element (56) comprise cooperating snap-fix attachment elements.

15. A method of mounting a dental abutment, comprising:
providing a tool assembly (2) according to any of the preceding claims;
releasably attaching the first end (16) of the first tool (12) to the abutment (4);
releasably attaching the second tool (4) to a fixing element (28);
passing the fixing element (28) on the second tool (14) through the first opening (24) and the second opening (26);
manipulating the second tool (14) so as to attach the abutment (4) to the implant (6) or frame using the fixing element (28); and
detaching the second tool (14) from the fixing element (28) and removing the second tool (14) through the second opening (26) and the first opening (24).

## Patentansprüche

1. Werkzeuganordnung (2) zum Befestigen eines Abutments (4) an einem Implantat (6) oder Aufbau mit einer Verlängerungsachse (B), wobei die Werkzeuganordnung umfasst:
• ein erstes Werkzeug (12), wobei das erste Werkzeug aufweist: eine Verlängerungsachse (A), ein erstes Ende (16), das geeignet ist, das Abutment (4) im Gebrauch zu umgreifen, und ein zweites Ende (18), wobei mindestens ein erster Abschnitt (20) des ersten Werkzeugs bei oder nahe dem ersten Ende (16) eine umfängliche Wandung (22) und gegenüber der Wandung eine erste Öffnung (24) hat, die sich entlang eines Teils oder entlang des ganzen ersten Abschnitts (20) erstreckt, wobei eine zweite, in axialer Richtung offene Öffnung (26) am ersten Ende (16) angeordnet ist;
• ein zweites Werkzeug (14) mit einer Verlängerungsachse (C), das so vorgesehen ist, dass es ein Befestigungselement (28) abnehmbar in Eingriff nimmt,
wobei zwischen der ersten Öffnung (24) und der zweiten Öffnung (26) ein zusammenhängender Raum (30) definiert ist, wodurch im Gebrauch (i) das Befestigungselement (28) oder (ii) das Befestigungselement (28), das am zweiten Werkzeug (14) angebracht ist, im Gebrauch durch die erste Öffnung (24) und die zweite Öffnung (26) geführt werden kann, um eine sichere Befestigung des Abutments (4) am Implantat (6) oder Aufbau unter Einsatz des zweiten Werkzeugs (14) zu erlauben,
wobei zwischen der Verlängerungsachse (B) des Implantats (6) und der Verlängerungsachse (C) des zweiten Werkzeugs (14) ein Winkel β besteht, und
**dadurch gekennzeichnet, dass** der Winkel β zwischen der Verlängerungsachse (B) des Implantats und der Verlängerungsachse (C) 10° bis 40° beträgt.

2. Werkzeuganordnung nach Anspruch 1, bei der zumindest ein Teil (32) der Wand (22) eine teilweise zylindrische Form hat.

3. Werkzeuganordnung nach Anspruch 2, bei der entlang zumindest des Teils (32) die Wand (22) eine teilweise zylindrische Form hat, sodass im axialen Querschnitt gesehen ein Winkel zwischen den Radien, die die Verlängerungsachse und jedes der beiden Umfangsenden der Wandung verbinden, (i) 120 Grad oder mehr, (ii) 150 Grad oder mehr, 180 Grad oder mehr oder 180 Grad beträgt.

4. Werkzeuganordnung nach einem der Ansprüche 2 und 3, bei der der Teil (32) mit zylindrischer Form bei dem ersten Ende (16) oder angrenzend an dieses angeordnet ist.

5. Werkzeuganordnung nach einem der vorstehenden Ansprüche, bei der sich der erste Abschnitt (20) des ersten Werkzeugs (12) über einen Teil der Länge des ersten Werkzeugs erstreckt.

6. Werkzeuganordnung nach einem der vorstehenden Ansprüche, bei der sich der erste Abschnitt (20) des ersten Werkzeugs über (i) 30-60%, (ii) 35-55%, (iii) 40-50%, (iv) 45-50% oder (v) 50% der Länge des ersten Werkzeugs (12) erstreckt.

7. Werkzeuganordnung nach einem der Ansprüche 5 und 6, bei der ein zweiter Abschnitt (34) des ersten Werkzeugs (12), der von einem Teil des ersten Werkzeugs, der nicht der erste Abschnitt (20) ist, gebildet wird, einen manuell zu greifenden Teil umfasst oder so vorgesehen ist, dass er abnehmbar in einen Griff zum Bewegen durch einen Benutzer eingreift.

8. Werkzeuganordnung nach einem der vorstehenden Ansprüche, bei der die Wand (22) im Querschnitt gesehen am ersten Ende oder angrenzend an dieses einen rechteckigen Abschnitt (32) und angrenzend an den zweiten Teil (34) einen gekrümmten Abschnitt (36) umfasst.

9. Werkzeuganordnung nach einem der vorstehenden Ansprüche, bei der der erste Abschnitt (20) des ersten Werkzeugs (12) größere Querabmessungen aufweist als der restliche Teil des ersten Werkzeugs (12).

10. Werkzeuganordnung nach einem der vorstehenden Ansprüche, die ferner am ersten Ende mindestens ein Eingriffselement (36) umfasst, das für ein abnehmbares Befestigen des Abutments (4) durch Zusammenwirken mit mindestens einem zweiten Eingriffselement (42) am Abutment (4) geeignet ist.

11. Werkzeuganordnung nach Anspruch 10, bei der das mindestens eine erste Eingriffselement (36) das eine eines Außengewindes (40) und eines Innengewindes umfasst und das mindestens eine zweite Eingriffselement (42) das andere eines Außengewindes und eines Innengewindes umfasst.

12. Werkzeuganordnung nach einem der vorstehenden Ansprüche, bei der das Befestigungselement (28) einen Stift oder eine Schraube umfasst, der/die zum Einschrauben in das Implantat (6) oder den Aufbau ausgestaltet ist.

13. Werkzeuganordnung nach einem der vorstehenden Ansprüche, bei der das zweite Werkzeug (14) an einem dritten Ende (52) von ihm mindestens ein drittes Eingriffselement (54) umfasst, das für ein abnehmbares Anbringen am Befestigungselement (28) durch Zusammenwirken mit mindestens einem vierten Eingriffselement (56) am Befestigungselement (28) ausgestaltet ist.

14. Werkzeuganordnung nach Anspruch 10, bei der das mindestens eine dritte Eingriffselement (54) und das mindestens eine vierte Eingriffselement (56), die zusammenwirken, zusammenwirkende Schnappbefestigungselemente umfassen.

15. Verfahren zum Befestigen eines Abutments, das umfasst:
Bereitstellen einer Werkzeuganordnung (2) nach einem der vorstehenden Ansprüche;
abnehmbares Anbringen des ersten Endes (16) des ersten Werkzeugs (12) am Abutment (4);
abnehmbares Anbringen des zweiten Werkzeugs (4) an einem Befestigungselement (28);
Führen des Befestigungselements (28) auf dem zweiten Werkzeug (14) durch die erste Öffnung (24) und die zweite Öffnung (26);
Bewegen des zweiten Werkzeugs (14) in der Weise, dass es das Abutment (4) am Implantat (6) oder dem Aufbau, der das Befestigungselement (28) nutzt, anbringt; und
Lösen des zweiten Werkzeugs (14) vom Befestigungselement (28) und Herausziehen des zweiten Werkzeugs (14) durch die zweite Öffnung (26) und die erste Öffnung (24).

## Revendications

1. Ensemble (2) d'outils pour monter un pilier dentaire (4) à un implant (6) ou un cadre ayant un axe d'allongement (B), l'ensemble d'outils comprenant :
• un premier outil (12), le premier outil ayant un axe d'allongement (A), une première extrémité (16) configurée pour engager, à l'utilisation, le pilier (4), et une deuxième extrémité (18), au moins une première partie (20) du premier outil à la ou à proximité de la première extrémité (16) ayant une paroi périphérique (22) et, opposée à la paroi, une première ouverture (24) s'étendant le long de tout ou d'une partie de la première partie (20), dans lequel une deuxième ouverture (26) ouverte dans un sens axial est disposée à la première extrémité (16) ;
• un deuxième outil (14) ayant un axe d'allongement (C) configuré pour engager de manière libérable un élément de fixation (28),
dans lequel un espace contigu (30) est défini entre la première ouverture (24) et la deuxième ouverture (26) d'où il résulte que, à l'utilisation, (i) l'élément de fixation (28), ou (ii) l'élément de fixation (28) fixé au deuxième outil (14), peut passer, à l'utilisation, à travers la première ouverture (24) et la deuxième ouverture (26) pour permettre une fixation sûre du pilier (4) à un implant (6) ou un cadre en utilisant le deuxième outil (14),
dans lequel il y a un angle β entre l'axe d'allongement (B) de l'implant (6) et l'axe d'allongement (C) du deuxième outil (14), et
**caractérisé en ce que** l'angle β entre l'axe d'allongement (B) de l'implant et l'axe d'allongement (C) est compris entre 10° et 40°.

2. Ensemble d'outils selon la revendication 1, dans lequel au moins une partie (32) de la paroi (22) a une forme cylindrique partielle.

3. Ensemble d'outils selon la revendication 2, dans lequel, le long de ladite au moins une partie (32), la paroi (22) a une forme cylindrique partielle de telle sorte que, vue en coupe transversale axiale, un angle formé entre des rayons joignant l'axe d'allongement et chacune des deux extrémités circonférentielles de la paroi est (i) 120 degrés ou plus, (ii) 150 degrés ou plus, 180 degrés ou plus, ou est 180 degrés.

4. Ensemble d'outils selon l'une quelconque des revendications 2 et 3, dans lequel la partie (32) avec la forme cylindrique est disposée à la ou adjacente à la première extrémité (16).

5. Ensemble d'outils selon l'une quelconque des revendications précédentes, dans lequel la première partie (20) du premier outil (12) s'étend sur une partie de la longueur du premier outil.

6. Ensemble d'outils selon l'une quelconque des revendications précédentes, dans lequel la première partie (20) du premier outil s'étend sur (i) 30-60%, (ii) 35-55%, (iii) 40-50%, (iv) 45-50% ou (v) 50% de la longueur du premier outil (12).

7. Ensemble d'outils selon l'une quelconque des revendications 5 et 6, dans lequel une deuxième partie (34) du premier outil (12), formée par une partie du premier outil autre que la première partie (20), comprend une partie pouvant être prise à la main ou est configurée pour engager de manière libérable une poignée pour une manipulation par un utilisateur.

8. Ensemble d'outils selon l'une quelconque des revendications précédentes, dans lequel la paroi (22) comprend, vue en coupe transversale, une partie rectangulaire (32) à la ou adjacente à la première extrémité et une partie incurvée (36) adjacente à la deuxième partie (34).

9. Ensemble d'outils selon l'une quelconque des revendications précédentes, dans lequel la première partie (20) du premier outil (12) a une dimension transversale plus grande que celle du reste du premier outil (12).

10. Ensemble d'outils selon l'une quelconque des revendications précédentes, comprenant en outre, à ladite première extrémité, au moins un premier élément d'engagement (36) configuré pour une fixation libérable au pilier (4) par l'intermédiaire d'au moins un deuxième élément d'engagement (42) coopérant sur le pilier (4).

11. Ensemble d'outils selon la revendication 10, dans lequel l'au moins un premier élément d'engagement (36) comprend un d'un filetage de vis externe (40) et d'un filetage de vis interne et l'au moins un deuxième élément d'engagement (42) comprend l'autre d'un filetage de vis externe et d'un filetage de vis interne.

12. Ensemble d'outils selon l'une quelconque des revendications précédentes, dans lequel l'élément de fixation (28) comprend un boulon ou une vis configuré(e) pour un vissage dans l'implant (6) ou le cadre.

13. Ensemble d'outils selon l'une quelconque des revendications précédentes, dans lequel le deuxième outil (14) comprend, à une troisième extrémité (52) de celui-ci, au moins un troisième élément d'engagement (54) configuré pour une fixation libérable à l'élément de fixation (28) par l'intermédiaire d'au moins un quatrième élément d'engagement (56) coopérant sur l'élément de fixation (28).

14. Ensemble d'outils selon la revendication 10, dans lequel l'au moins un troisième élément d'engagement (54) et l'au moins un quatrième élément d'engagement (56) coopérant comprennent des éléments de fixation coopérant par fixation par pression.

15. Procédé de montage d'un pilier dentaire, comprenant :
la fourniture d'un ensemble (2) d'outils selon l'une quelconque des revendications précédentes ;
la fixation libérable de la première extrémité (16) du premier outil (12) au pilier (4) ;
la fixation libérable du deuxième outil (4) à un élément de fixation (28) ;
le passage de l'élément de fixation (28) sur le deuxième outil (14) à travers la première ouverture (24) et la deuxième ouverture (26) ;
la manipulation du deuxième outil (14) de manière à fixer le pilier (4) à l'implant (6) ou au cadre en utilisant l'élément de fixation (28) ; et
le détachement du deuxième outil (14) de l'élément de fixation (28) et le retrait du deuxième outil (14) à travers la deuxième ouverture (26) et la première ouverture (24).
